# EUROPEAN PATENT APPLICATION

(11) **EP 4 321 494 A1**
(43) Date of publication of application: **14.02.2024**
(21) Application number: 22784689.6
(22) Date of filing: 06.04.2022
(51) Int. Cl.: C04B 35/50, C01G 39/00, C04B 35/495

(54) **CERAMIC MATERIAL, GREEN COMPACT, SINTERED COMPACT, AND ARTICLE**

(30) Priority: 08.04.2021 JP 2021065750
(71) Applicant: Niterra Co., Ltd., Nagoya-shi, Aichi 461-0005 (JP); Tokyo Institute of Technology, Tokyo 152-8550 (JP)
(72) Inventor: SHOJI, Mao, Nagoya-shi Aichi 467-8525 (JP); KOZUKA, Hisashi, Nagoya-shi Aichi 467-8525 (JP); OKIMURA, Yasuyuki, Nagoya-shi Aichi 467-8525 (JP); NAKAJIMA, Akira, Tokyo 152-8550 (JP)
(74) Representative: J A Kemp LLP
(86) International application number: PCT/JP2022/017171
(87) International publication number: WO 2022/215707

(57) **Abstract**

A ceramic material of the present invention contains a La-Mo-based composite oxide and at least one first element selected from the group consisting of Si and Al, in which the amount of first element contained is more than 0% by mass and 0.5% or less by mass.

## Description

### TECHNICAL FIELD

The present invention relates to a ceramic material, a green compact, a sintered compact, and an article.

### BACKGROUND ART

As disclosed in Patent Literature 1, ceramic materials composed of composite oxides each containing a rare-earth element, molybdenum (Mo), and the like are known as new types of inorganic materials having antibacterial properties and antiviral properties. Among such ceramic materials, composite oxides (for example, La₂Mo₂O₉) each containing lanthanum (La) as a rare-earth element have been particularly receiving attention because they are advantageous for industrial production due to the use of lanthanum, which is inexpensive and easily available among rare-earth elements.

### RELATED ART DOCUMENT

### PATENT DOCUMENT

Patent Document 1: International Publication No. 2020/017493

### PROBLEM TO BE SOLVED BY THE INVENTION

However, until now, no consideration has been given to the effect of an element other than lanthanum, molybdenum, and oxygen on the antibacterial properties and antiviral properties of the composite oxide when the element is mixed with the composite containing lanthanum and molybdenum.

### SUMMARY OF THE INVENTION

It is an object of the present invention to provide, for example, a ceramic material containing a La-Mo-based composite oxide as a main component and having excellent antibacterial properties and antiviral properties.

### MEANS FOR SOLVING PROBLEMS

The inventors have conducted intensive studies to achieve the aforementioned object and have found that a ceramic material containing a La-Mo-based composite oxide as a main component and containing at least one first element selected from the group consisting of Si and Al in a predetermined proportion has excellent antibacterial properties and antiviral properties. This finding has led to the completion of the present invention.

Means for solving the above problem are as follows.
<1> A ceramic material contains a La-Mo-based composite oxide and at least one first element selected from the group consisting of Si and Al, in which the amount of first element contained is more than 0% by mass and 0.5% or less by mass.
<2> In the ceramic material described in <1>, the ceramic material is free of an element selected from the group consisting of Cd, Hg, Pb, Ra, and U.
<3> In the ceramic material described in <1> or <2>, the La-Mo-based composite oxide contains La₂Mo₂O₉.
<4> A green compact is obtained by compression molding of the ceramic material described in any one of <1> to <3>, in which the ceramic material is in powder form.
<5> A sintered compact is obtained by sintering the ceramic material described in any one of <1> to <3>.
<6> An article contains the ceramic material described in any one of <1> to <3> on at least part of a surface of the article.
<7> An article contains the ceramic material described in any one of <1> to <3> dispersed in a base material.

### EFFECT OF THE INVENTION

According to the present invention, it is possible to provide, for example, a ceramic material containing a La-Mo-based composite oxide as a main component and having excellent antibacterial properties and antiviral properties.

### BRIEF DESCRIPTION OF THE DRAWINGS

[Fig. 1] Fig. 1 is a graph illustrating the results of the antibacterial performance evaluation test in Example 3.
[Fig. 2] Fig. 2 is a graph illustrating the results of the antiviral performance evaluation test in Example 3.
[Fig. 3] Fig. 3 is a graph illustrating the results of the antibacterial performance evaluation test in Example 4.
[Fig. 4] Fig. 4 is a graph illustrating the results of the antiviral performance evaluation test in Example 4.

### MODES FOR CARRYING OUT THE INVENTION

The ceramic material of the present embodiment contains a La-Mo-based composite oxide and at least one first element selected from the group consisting of Si and Al, and contains the first element in a predetermined proportion.

The La-Mo-based composite oxide is a main component of the ceramic material, and is mainly composed of a composite oxide of lanthanum (La) and molybdenum (Mo). The La-Mo-based composite oxide is not particularly limited as long as the object of the present invention is not impaired. Examples thereof include La₂Mo₂O₉, La₂Mo₃O₁₂, La₆MoO₁₂, La₇Mo₇O₃₀, La₂Mo₄O₁₅, La₂MoO₆, La₄MoO₉, and LaMo₂O₅. These La-Mo-based composite oxides may be used alone or in combination of two or more.

The La-Mo-based composite oxide is preferably at least one selected from the group consisting of La₂Mo₂O₉, La₂Mo₄O₁₅, and La₂MoO₆, more preferably contains at least La₂Mo₂O₉, and is particularly preferably La₂Mo₂O₉.

The La-Mo-based composite oxide may be a La-Mo-based composite oxide containing only lanthanum (La) and molybdenum (Mo) as metal elements (unsubstituted La-Mo-based composite oxide) or may be a La-Mo-based composite oxide, such as La_{1.8}Ce_{0.2}Mo₂O₉, in which lanthanum (La) is partially substituted with another metal element, such as Ce, W, or V (partially substituted La-Mo-based composite oxide).

The La-Mo-based composite oxide as the main component is contained in the ceramic material in an amount of at least 99.0% or more by mass, preferably 99.3 % or more by mass, more preferably 99.5 % or more by mass.

The ceramic material contains a trace element in addition to the La-Mo-based composite oxide. The trace element in the ceramic material is detected with an X-ray fluorescence spectrometer (XRF) or an ICP emission spectrometer (ICP) as described below.

Examples of the trace element include the first element composed of at least one selected from the group consisting of Si and Al. The first element is contained as an essential component in the ceramic material. The amount of first element contained (first element content) in the ceramic material is more than 0% by mass and 0.5% or less by mass. It is presumed that when the amount of first element contained (first element content) in the ceramic material is in such a range, phase separation between the La-Mo-based composite oxide (for example, La₂Mo₂O₉) and lanthanum aluminate can be inhibited, thereby acquiring excellent antibacterial properties and antiviral properties and shortening the time required to express the antibacterial properties and antiviral properties. Lanthanum aluminate does not contribute to the antibacterial properties or antiviral properties. Thus, the phase separation between lanthanum aluminate and the La-Mo-based composite oxide causes deteriorations in the antibacterial properties and antiviral properties of the ceramic material. At an excessively large amount of first element (that is, an amount of first element contained (first element content) of more than 0.5% by mass), the La-Mo-based composite oxide and lanthanum aluminate are phase-separated, causing deteriorations in antibacterial properties and antiviral properties.

The first element is preferably contained in the ceramic material in an amount of 0.0001% or more by mass, more preferably more than 0.0003% by mass, still more preferably 0.01% or more by mass, still even more preferably 0.02% or more by mass. The first element may be contained in an amount of 0.1% or less by mass, or 0.05% or less by mass.

The detection of the first element in the ceramic material is first performed with the XRF as described below. When the first element can be detected by the XRF, the amount of first element contained (first element content) in the ceramic material is determined based on the detection result. When the first element in the ceramic material cannot be detected by the XRF, the detection of the first element is performed on the ceramic material with ICP as described below.

Examples of other trace elements include a second element composed of at least one selected from the group consisting of Ca, Mg, Ni, Co, Na, S, Sr, Y, Zn, and B. The second element is preferably contained in the ceramic material in an amount of 0.01% or less by mass (100 ppm or less), more preferably 0.008% or less by mass (80 ppm or less) .

The detection of the second element in the ceramic material is performed with ICP as described below.

Examples of other trace elements include harmful elements that may affect the human body. In this specification, the harmful elements are Cd, Hg, Pb, Ra, and U. Preferably, the ceramic material is substantially free of a harmful element. In this specification, the phrase "substantially free of a harmful element" indicates that the amount of harmful element contained (harmful element content) is equal to or less than the detection limit when the amount of trace element contained (trace element content) in the ceramic material is evaluated by ICP as described below.

The harmful elements may be mixed in raw materials or adhered to, for example, a production apparatus (a heating furnace, a drying device, a pulverizing device, etc.), although they are present in extremely small amounts. Thus, the ceramic material substantially free of a harmful element can be obtained by, for example, selecting a high-purity raw material containing no impurity, such as a harmful element, or avoiding the use of a production apparatus to which a harmful element may adhere.

The ceramic material of the present embodiment is produced by performing ball-mill pulverization or mixing (hereinafter, also referred to as "ball-mill treatment") with alumina balls for a long time (for example, 90 hours) in the production process of the La-Mo-based composite oxide described below so as to contain the first element in a predetermined proportion. The ball-mill treatment may be performed, for example, at the time of mixing a lanthanum compound and a molybdenum compound, or may be performed at the time of pulverizing a powder obtained after calcination as described below. This prolonged ball-mill treatment finally results in the presence of a predetermined amount of Al originating from the alumina balls in the ceramic material. When silica balls are used, Si is contained in the ceramic material. When zirconia balls are used, Zr is contained in the ceramic material. As long as the object of the present invention is not impaired, a predetermined amount of the first element may be supplied to the ceramic material by another method, for example, by incorporating the predetermined amount of first element into a raw material in advance.

To set the amount of second element contained (second element content) in the ceramic material within the above-described range, for example, a high-purity raw material having a low second element content (for example, a high-purity molybdenum compound) is used in the production of the La-Mo-based composite oxide.

The ceramic material may contain trace elements (for example, Ce (cerium), W (tungsten), V (vanadium), and Gd (gadolinium)) other than the first element, the second element, and the harmful elements as long as the object of the present invention is not impaired.

A method for producing the La-Mo-based composite oxide will be described below.

The La-Mo-based composite oxide is produced through a preparation step and a firing step described below.

The preparation step is a step of mixing a lanthanum compound and a molybdenum compound to prepare a mixed powder.

The lanthanum compound is a compound containing lanthanum (La) necessary for producing the La-Mo-based composite oxide. Examples thereof include La(OH)₃, La₂O₃, and La₂(CO₃)₃. As the lanthanum compound, for example, at least one selected from the group consisting of La(OH)₃, La₂O₃, and La₂(CO₃)₃ may be used. The lanthanum compound is preferably La(OH)₃. The purity of the lanthanum compound is preferably 90.0% or more by mass, more preferably 99.9% or more by mass.

The molybdenum compound is a compound containing molybdenum (Mo) necessary for producing the La-Mo-based composite oxide. Examples thereof include MoOs, MoO₂, MoO, Mo(OH)₃, and Mo(OH)₅. As the molybdenum compound, for example, at least one selected from the group consisting of MoOs, MoO₂, MoO, Mo(OH)₃, and Mo(OH)₅ may be used. The molybdenum compound is preferably MoOs. The purity of the molybdenum compound is preferably 90.0% or more by mass, more preferably 99.5% or more by mass, still more preferably 99.9% or more by mass.

The mixing ratio of the lanthanum compound and the molybdenum compound is preferably adjusted in such a manner that the mole ratio is La:Mo = 1:1.

The mixing of the lanthanum compound and the molybdenum compound is performed usi
ng the lanthanum compound and the molybdenum compound being in a solid phase state with each other. The lanthanum compound and the molybdenum compound are both in powder form. They may be mixed together in the powder form, or may be wet-mixed after the addition of a solvent, such as a lower alcohol (ethanol), to the powders. The mixing of the lanthanum compound and the molybdenum compound may be performed by, for example, wet mixing using alumina balls (alumina balls) or the like. The mixture that has been subjected to wet mixing (wet-mixed mixture) is appropriately dried by, for example, water-bath drying or spray drying.

Through the preparation step described above, a mixed powder of the lanthanum compound and the molybdenum compound is prepared.

The firing step is a step in which the mixed powder prepared in the preparation step is fired in the solid phase state. For example, in the firing step, the mixed powder is fired in a solid phase state at a temperature of 500°C or higher and 700°C or lower for 2 hours or more. The firing step does not need to be performed in a special synthetic air atmosphere, and is performed in an ordinary air atmosphere.

Through this firing step, the lanthanum compound in a solid phase state and the molybdenum compound in a solid phase state in the mixed powder react with each other to form a powdery La-Mo-based composite oxide containing, for example, La₂Mo₂O₉.

In this specification, the firing step performed for reacting the lanthanum compound and the molybdenum compound in the mixed powder may be referred to as a "first firing step". The first firing step is a firing step (calcining step) performed before the powdery La-Mo-based composite oxide is sintered.

After the firing step, a powdery La-Mo-based composite oxide (sometimes referred to as a "La-Mo-based composite oxide powder") is obtained. The La-Mo-based composite oxide powder may be prepared in granular form by granulation using spray drying or the like, as needed. For example, the resulting La-Mo-based composite oxide powder is pulverized by wet mixing with, for example, alumina balls (an example of ball-mill treatment) with a solvent such as ethanol added, thereby preparing a slurry.

As described above, a predetermined amount of the first element is supplied into the La-Mo-based composite oxide by pulverization using the wet mixing for a long time (for example, 90 hours).

The resulting slurry is dried, for example, by spray drying to provide a granular La-Mo-based composite oxide granulated to a predetermined size.

As described above, a predetermined amount of the first element is supplied in the production of the La-Mo-based composite oxide, thereby providing the ceramic material of the present embodiment.

The La-Mo-based composite oxide containing a predetermined amount of the first element may be sintered and used in the form of a sintered compact. For example, the sintered compact of the La-Mo-based composite oxide (ceramic material) containing a predetermined amount of the first element is produced as follows: The powdery La-Mo-based composite oxide is compression-molded into a predetermined shape (for example, a cylindrical shape or a disk shape) with a predetermined press machine. The resulting formed article (green compact) is sintered by firing under predetermined temperature conditions (for example, 900°C or higher).

In this specification, the firing step of sintering the La-Mo-based composite oxide (ceramic material) may be referred to as a "second firing step". The second firing step is a regular firing step performed for sintering the La-Mo-based composite oxide containing a predetermined amount of the first element, and can be performed in an air atmosphere.

As described above, a predetermined amount of the first element is supplied in the production of the La-Mo-based composite oxide, so that the ceramic material of the present embodiment containing a predetermined amount of the first element is provided.

The ceramic material of the present embodiment exhibits antibacterial properties (antibacterial activity) and antiviral properties (antiviral activity) in powder form before sintering. In addition, the ceramic material of the present embodiment exhibits the antibacterial properties and antiviral properties after sintering as well as before sintering. Methods for evaluating the antibacterial properties and antiviral properties of the lanthanum molybdenum composite oxide will be described below.

The ceramic material of the present embodiment is water repellent. The water repellency is evaluated using the sintered compact of the ceramic material. Specifically, the measurement is performed with reference to JIS R 3257:1999 (Testing method of wettability of glass substrate). The contact angle of water on the ceramic material is 60° to 110°.

The form of the ceramic material of the present embodiment may be a powder, or a granular form obtained by granulating the powder by spray drying or the like.

The ceramic material may be used in the form of a green compact formed by compression-molding a powdery ceramic material.

The ceramic material may be used in the form of a sintered compact.

The ceramic material may be used with the ceramic material attached to at least part of a surface of an article. The material constituting the article to which the ceramic material is attached is not particularly limited as long as the object of the present invention is not impaired. Examples thereof include glass, ceramic materials, synthetic resins, such as thermoplastic resins and thermosetting resins, rubber materials (natural rubber and synthetic rubber), genuine leathers (natural leathers), synthetic leathers, metallic materials made of metals or alloys, wood, paper, fibers, nonwoven fabrics, silicon (e.g., silicon wafers), carbon materials, minerals, and gypsum.

The ceramic material may be used with the ceramic material dispersed in a predetermined base material. The base material in which the ceramic material is dispersed is not particularly limited as long as the object of the present invention is not impaired. Examples thereof include glass, ceramic materials, synthetic resins, such as thermoplastic resins and thermosetting resins, rubber materials (natural rubber and synthetic rubber), synthetic leathers, metallic materials made of metals or alloys, paper, fibers, nonwoven fabrics, carbon materials, minerals, and gypsum.

While the present invention will be further described based on examples, the present invention is not particularly limited to these examples.

### [Example 1]

La(OH)₃ was provided as a lanthanum compound. MoOs was provided as a molybdenum compound. The purity of MoOs was 99.5% by mass. The raw-material powder of the lanthanum compound and the raw-material powder of the molybdenum compound were each weighed in such a manner that the mole ratio was 1:2 (La:Mo = 1:2). The weighed raw-material powders were mixed together with a predetermined amount of ethanol. The resulting wet mixture was dried to provide a mixed powder (preparation step).

The mixed powder was fired (calcined) in an air atmosphere under a temperature condition of 600°C for 2 hours to provide a calcined powder composed of a reaction product of the lanthanum compound and the molybdenum compound. To granulate the resulting calcined powder, the following operation was performed.

The calcined powder was placed in a resin pot together with a predetermined amount of ethanol. The mixture was pulverized by wet mixing using alumina balls (ball milling) for 30 hours to prepare a slurry (pulverization step).

Then the resulting slurry was spray-dried to provide a granular ceramic material of Example 1.

### [Example 2]

A granular ceramic material of Example 2 was prepared in the same manner as in Example 1, except that the raw-material powder of the lanthanum compound and the raw-material powder of the molybdenum compound were weighed and mixed in such a manner that the mole ratio was 2:1 (La:Mo = 2:1), and the firing conditions were changed to 650°C for 10 hours.

### [Example 3]

A granular ceramic material of Example 3 was prepared in the same manner as in Example 1, except that the raw-material powder of the lanthanum compound and the raw-material powder of the molybdenum compound were weighed and mixed in such a manner that the mole ratio was 1:1 (La:Mo = 1:1), and the firing conditions were changed to 650°C for 10 hours.

### [Example 4]

A granular ceramic material of Example 4 was prepared in the same manner as in Example 1, except that MoOs having a purity of 99.9% by mass was used as the molybdenum compound, and the pulverization was performed by the wet mixing (ball milling) using alumina balls for 90 hours.

### [Identification of La-Mo-Based Composite Oxide with XRF]

For the ceramic material of each example, the elements contained in the La-Mo-based composite oxide were identified with an X-ray fluorescence spectrometer (XRF). The measurement conditions are described below.

### <Measurement Conditions>

Measurement apparatus: wavelength dispersive X-ray fluorescence spectrometer (apparatus name "ZSX-Primus II, available from Rigaku Corporation)
Target element: B to U in the periodic table
Measurement range: ppm level to main component
Excitation source: characteristic X-ray (Rh)
Measurement size: 30 mm

### [Detection of Trace Element 1]

For the ceramic material of Example 4, qualitative analysis and semi-quantitative analysis of elements (trace elements) other than lanthanum and molybdenum were performed based on the resulting XRF spectrum. Table 1 presents the results.

In the ceramic materials of Examples 1 to 3, elements (trace elements) other than lanthanum and molybdenum were not detected by the XRF spectrum. Thus, in Examples 1 to 3, elements (trace elements) other than lanthanum and molybdenum were detected by ICP emission spectroscopy described below.

### [Detection of Trace Element 2]

For the ceramic materials of Examples 1 to 3, elements (trace elements) other than lanthanum and molybdenum were detected by ICP emission spectroscopy under the conditions described below. Then, the amounts (ppm) of major elements having larger proportions were determined in terms of oxides. Table 1 presents the results.

### <Measurement Conditions>

Measurement apparatus: inductively coupled plasma atomic emission spectrometer (ICP-AES) (model "iCAP-6500", available from Thermo Fisher Scientific)
Sample pretreatment: thermal decomposition treatment with nitric acid (hydrochloric acid added)

### [Detection of Harmful Element]

The measurement results (ICP spectra) of the ceramic materials of Examples 1 to 3 by ICP emission spectroscopy were used to determine whether a harmful element was contained in the ceramic materials. Table 1 presents the results.

The ceramic material of Example 4 was examined for the presence or absence of a harmful element by the ICP emission spectroscopy, as in Example 1, etc. In Example 4, trace elements (second elements) were also identified based on the measurement results. Table 1 presents the results.

### [Evaluation of Antibacterial Performance]

The ceramic material of each example was subjected to an antibacterial performance evaluation test in accordance with JIS Z 2801:2012. Specifically, Staphylococcus aureus was used as a test bacterium. The antibacterial activity value R after 6 hours was determined. The antibacterial activity value R was determined after the action time (6 hours) using the following formula: R = Ut - At. Ut is the logarithmic value (average value) of the viable cell count at the action time t (after 6 hours) on the unprocessed test article. At is the logarithmic value (mean value) of the viable cell count at the action time t (after 6 hours) on the processed test article. The number of samples for each test article is 3. Each of the test articles was produced by applying 1.8 mg of a ceramic material in a predetermined dispersion onto a surface of a glass substrate (50 mm × 50 mm) and drying it (the amount of powder per unit area in the test article is 0.0072 mg/mm²).

The viable cell count (cfu/cm²) at a concentration of an inoculum solution of 2.6 × 10⁶ cfu/ml and an amount of inoculation solution of 0.1 ml per sample was determined. Table 1 presents the results of the antibacterial activity value R.

The lower limit of detection in the antibacterial performance evaluation was defined as follows. The viable cell count at an elapsed time of 0 hours is represented by N₀. The viable cell count at an elapsed time of t is represented by Nₜ. The common logarithm of the cell viability Nₜ/N₀ is represented by log(Nₜ/N₀). The time t is the action time. When log (Nₜ/N₀)- log(N_{t+1/}N₀) ≤ 0.5 in spite of the fact that the value of the antibacterial activity value R was 2.0 or more (i.e., R ≥ 2.0), the smaller value of log (Nₜ/N₀) and log(Nₜ₊₁/N₀) was defined as the lower detection limit.

### [Evaluation of Antiviral Performance]

The ceramic material of each Example was subjected to an antiviral performance evaluation test in accordance with JIS R 1756:2020 "Photocatalyst under indoor lighting environment, antiviral, film cover method". Specifically, bacteriophage Qβ was used as the test virus. The antiviral activity value (dark place) VD after 6 hours was determined. The antiviral activity value (dark place) VD was calculated from VD = Log(UD) - Log(TD) with respect to the action time (after 6 hours). Log(UD) is a logarithmic value (average value) of the number of phages at the action time (after 6 hours) on the unprocessed test article. Log(TD) is a logarithmic value (average value) of the number of phages at the action time (after 6 hours) on the processed test article. The number of samples for each test article is 3. Each of the test articles was produced by applying 1.8 mg of a ceramic material in a predetermined dispersion onto a surface of a glass substrate (50 mm × 50 mm) and drying it (the amount of powder per unit area in the test article is 0.0072 mg/mm²).

The number of phages (infection value) (cfu/cm²) was counted at a concentration of an inoculum phage solution of 2.5 × 10⁷ cfu/ml and an amount of inoculum phage solution of 0.1 ml per sample. Table 1 presents the results of the antiviral activity value VD.

The lower limit of detection in the antiviral performance evaluation was defined as follows. The number of phage (infection value) at an elapsed time of 0 hours is N'₀. The number of phage (infection value) at an elapsed time of t hours is N'ₜ. The common logarithm of the phage viability N'ₜ/N'₀ is represented by log(N'ₜ/N'₀). The time t is the action time. When log(N'ₜ/N'₀) - log(N'ₜ₊₁/N'₀) ≤ 0.5 in spite of the fact that the value of the antiviral activity value VD was 3.0 or more (i.e., VD ≥ 3.0), the smaller value of log (N'ₜ/N'₀) and log (N'ₜ₊₁/N'₀) was defined as the lower detection limit.

**[Table 1]**

| | Ceramic material | | | | | | | | | Evaluation | |
|---|---|---|---|---|---|---|---|---|---|---|---|
| | La-Mo composite oxide | | Trace element | | | | | | | Antibacterial activity value (after 6 hours) | Antiviral activity value (after 6 hours) |
| | Main product | By-product | First element | Second element | Main trace element | Harmful element | Content (ppm) | Method for detecting major trace element | Method for detecting harmful element | | |
| Example 1 | La₂Mo₄O₁₅ | | Al, Si | Ca, Mg, Ni, Co, Na, S, Sr, Y, Zn, B | Zn, Y, Sr, Na | not detected | 15 | ICP | ICP | 2.1 | 0.9 |
| Example 2 | La₂MoO₆ | La₂Mo₂O₉ | Al, Si | Ca, Mg, Ni, Co, Na, S, Sr, Y, Zn, B | Zn, Y, Sr, Na | not detected | 7 | ICP | ICP | 4.0 | 4.2 |
| Example 3 | La₂Mo₂O₉ | | Al, Si | Ca, Mg, Ni, Co, Na, S, Sr, Y, Zn, 6 | Zn, Y, Sr, Na | not detected | 19 | ICP | ICP | 4.0 | 5.6 |
| Example 4 | La₂Mo₂O₉ | | Al, Si | Ca, Mg, Ni, Co, Na, S, Sr, Y, Zn, B | Al, Si | not detected | 403 | XRF | ICP | 4.4 | 5.1 |

In Examples 1 to 3, the ceramic materials were produced using the molybdenum compound (MoO₃) with lower purity than in Example 4 as a raw material. For this reason, the ceramic materials of Examples 1 to 3 all contained Al, Si, Ca, Mg, Ni, Co, Na, S, Sr, Y, Zn, and B as trace elements originating from the raw material. As described above, the ceramic materials of Examples 1 to 3 contain Al and Si, which are the first elements, in predetermined proportions. In the ceramic materials of Examples 1 to 3, the second element contents (Ca, Mg, Ni, Co, Na, S, Sr, Y, Zn, and B) were controlled to 0.0015% by mass (15 ppm), 0.0007% by mass (7 ppm), and 0.0019% by mass (19 ppm), respectively. The ceramic materials of Examples 1 to 3 were found to have excellent antibacterial properties and antiviral properties and a short time to express the antibacterial properties and antiviral properties.

In Examples 1 to 3, no harmful element was detected.

In Example 4, the molybdenum compound (MoO₃) having higher purity than in Examples 1 to 3 was used as a raw material, and pulverization was performed by wet mixing (ball milling) using alumina balls for a longer time (90 hours) than those in Examples 1 to 3 at the time of mixing of the lanthanum compound and the molybdenum compound, thereby producing the ceramic material. Thus, in the ceramic material of Example 4, the first elements Al and Si are contained as main trace elements in an amount of 0.0403% by mass (403 ppm). These first elements originate from substances separated from the alumina balls during long-term pulverization using the alumina balls. The ceramic material of Example 4 was found to have excellent antibacterial properties and antiviral properties and a short time to express the antibacterial properties and antiviral properties.

The results of ICP emission spectroscopy indicated the presence of the second elements (Ca, Mg, Ni, Co, Na, S, Sr, Y, Zn, and B) in the ceramic material of Example 4.

In Example 4, no harmful element was detected.

The results of the antibacterial performance evaluation test and the antiviral performance evaluation test in Examples 3 and 4 are compared with the results of the antibacterial performance evaluation test and the antiviral performance evaluation test in Comparative examples 1 and 2.

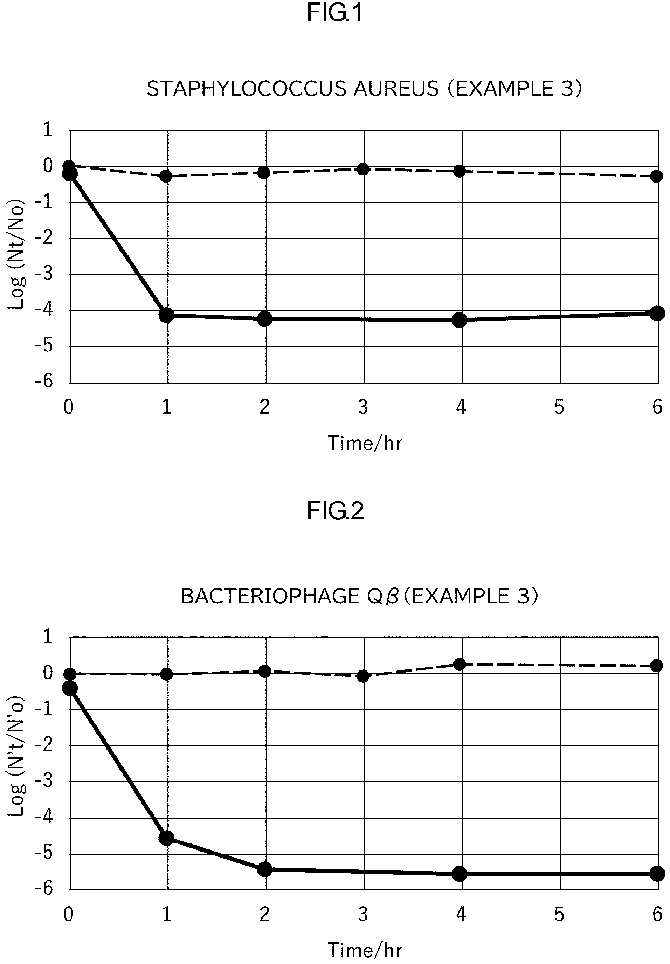

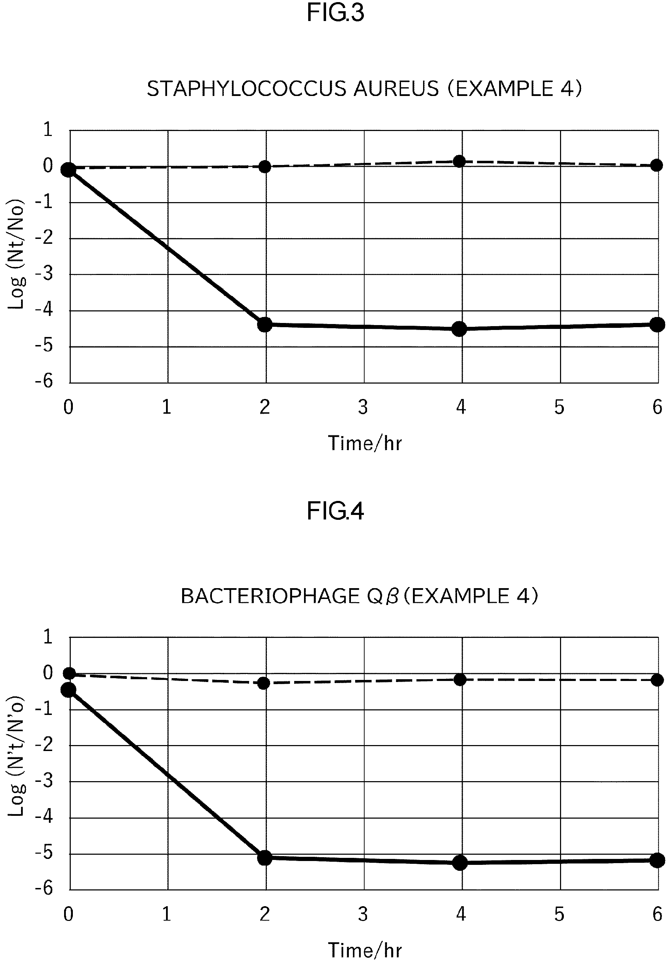

Fig. 1 is a graph illustrating the results of the antibacterial performance evaluation test in Example 3. Fig. 2 is a graph illustrating the results of the antiviral performance evaluation test in Example 3. Fig. 3 is a graph illustrating the results of the antibacterial performance evaluation test in Example 4. Fig. 4 is a graph illustrating the results of the antiviral performance evaluation test in Example 4. In Figs. 1 to 4, the graphs indicated by solid lines correspond to the results in Example 3 or Example 4, and the graphs indicated by broken lines correspond to the blank results. In each of Figs. 1 and 3, the vertical axis is the common logarithm (Log(N_{t/}N₀)) of the cell viability Nₜ/N₀, where N₀ is the viable cell count at an elapsed time of 0 hours, and Nₜ is the viable cell count at an elapsed time of t (hours). The horizontal axis is the elapsed time t (hours). In Example 4 (Fig. 3), the elapsed time t started from 2 hours. In each of Figs. 2 and 4, the vertical axis is the common logarithm (Log(N'ₜ/N'₀)) of the phage viability N'ₜ/N'₀, where N'₀ is the number of phage (infection value) at an elapsed time of 0 hours, and N'ₜ is the number of phage (infection value) at an elapsed time of t (hours). The horizontal axis is the elapsed time t (hours). In Example 4 (Fig. 4), the elapsed time t started from 2 hours.

A ceramic material produced by a complex polymerization method described in Patent Literature 1 (Example 1 of Patent Literature 1) is presented as Comparative example 1. A ceramic material produced by a solid phase method described in Patent Literature 1 (Example 2 of Patent Literature 1) is presented as Comparative example 2.

In Comparative example 1 (Example 1 of Patent Literature 1 (complex polymerization method)), it took 4 hours for Staphylococcus aureus and bacteriophage Qβ(substitute for norovirus) to reach the lower limit of detection. In Comparative example 2 (Example 2 of Patent Literature 1 (solid phase method)), Staphylococcus aureus did not reach the lower limit of detection within 6 hours, and it took 6 hours for bacteriophage Qβ (substitute for norovirus) to reach the lower limit of detection.

In contrast, in the case of Example 3, as illustrated in Figs. 1 and 2, Staphylococcus aureus and bacteriophage Qβ (substitute for norovirus) reached the lower limit of detection in 1 hour. In Example 4, as illustrated in Figs. 3 and 4, Staphylococcus aureus and bacteriophage Qβ (substitute for norovirus) reached the lower limit of detection in 2 hours at the latest. Thus, it was found that in Examples 3 and 4, the time required to express the antibacterial properties and antiviral properties was even shorter than in Comparative examples 1 and 2.

## Claims

1. A ceramic material, comprising a La-Mo-based composite oxide and at least one first element selected from the group consisting of Si and Al, wherein an amount of the first element contained is more than 0% by mass and 0.5% or less by mass.

2. The ceramic material according to Claim 1, wherein the ceramic material is free of an element selected from the group consisting of Cd, Hg, Pb, Ra, and U.

3. The ceramic material according to Claim 1 or 2, wherein the La-Mo-based composite oxide contains La₂Mo₂O₉.

4. A green compact obtained by compression molding of the ceramic material according to any one of Claims 1 to 3,
wherein the ceramic material is in powder form.

5. A sintered compact obtained by sintering the ceramic material according to any one of Claims 1 to 3.

6. An article, comprising the ceramic material according to any one of Claims 1 to 3 on at least part of a surface of the article.

7. An article, comprising the ceramic material according to any one of Claims 1 to 3 dispersed in a base material.
